(19) Europäisches Patentamt
European Patent Office
Office européen des brevets

(11) EP 4 653 491 A1

(12) EUROPÄISCHE PATENTANMELDUNG

(43) Veröffentlichungstag:
**26.11.2025 Patentblatt 2025/48**

(21) Anmeldenummer: **25177227.3**

(22) Anmeldetag: **19.05.2025**

(51) Internationale Patentklassifikation (IPC):
***C08J 9/00*** *(2006.01)* ***C08G 77/46*** *(2006.01)*
***C08J 9/14*** *(2006.01)* ***C08L 61/04*** *(2006.01)*

(52) Gemeinsame Patentklassifikation (CPC):
(C-Sets verfügbar)
**C08J 9/0061; C08G 77/46; C08J 9/141;**
**C08J 9/143; C08J 9/149; C08L 61/04;**
C08J 2203/18; C08J 2361/04; C08J 2483/12
(Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **24.05.2024 EP 24177903**

(71) Anmelder: **Evonik Operations GmbH**
**45128 Essen (DE)**

(72) Erfinder:
- **Otto, Sarah**
  **45128 Essen (DE)**
- **Suchan, Michael**
  **45894 Gelsenkirchen (DE)**
- **Janßen, Martin**
  **45475 Mülheim an der Ruhr (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

# (54) SCHAUMSTABILISATOREN FÜR PHENOLSCHAUM

(57) Die Erfindung betrifft eine Zusammensetzung zur Herstellung von Phenolharz-Schaumstoff, umfassend mindestens ein Phenolharz, mindestens ein Treibmittel, mindestens einen Katalysator sowie mindestens ein Polyethersiloxan nach Formel 1, $M_aM_b{}^1D_cD_d{}^1$,
mit

M = 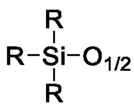 , $M^1$ = 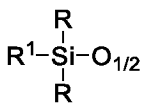 ,

D = 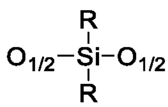 , $D^1$ = 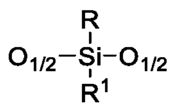 ,

a = 0 bis 2, b = 0 bis 2, c = 1 bis 100, d = 0 bis 40,
wobei
a + b = 2, a + b + c + d = 5 bis 140, (a + b + c + d) / (b + d) = 5 bis 8,5,
R =
jeweils unabhängig voneinander, gleiche oder verschiedene Alkylreste mit 1 bis 16 Kohlenstoffatomen, gleiche oder verschiedene Arylreste mit 6 bis 16 Kohlenstoff-atomen, H oder -O-$R^2$,
$R^2$ =
jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H,
$R^1$ =
jeweils unabhängig voneinander gleiche oder verschiedene Alkylreste mit 6 bis 18 Kohlenstoffatomen oder gleiche oder verschiedene Polyether-Reste nach Formel 2,

EP 4 653 491 A1

$$-R^3-O-\left[CH_2CH_2O\right]_e\left[CH_2CH(CH_3)O\right]_f\left[CH(CH_3)CH_2O\right]_g\left[CR^4{}_2CR^4{}_2O\right]_h-R^5 \quad \text{(Formel 2)}$$

$R^3$ =
jeweils unabhängig voneinander gleiche oder verschiedene divalente Alkylreste mit 2 bis 15 Kohlenstoffatomen,
$R^4$ =
jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H,
wobei nicht alle 4 Reste $R^4$ in $[CR^4{}_2CR^4{}_2O]$ gleich H sind, und wobei in $[CR^4{}_2CR^4{}_2O]$ nicht ein Rest $R^4$ gleich Methyl und die verbleibenden drei Reste $R^4$ gleich H sind,
$R^5$ =
jeweils unabhängig voneinander gleiche oder verschiedene Reste ausgewählt aus der Gruppe bestehend aus: $R^2$ und $C(O)R^2$,
e =
0 bis 100, f = 0 bis 100, g = 0 bis 100, h= 0 bis 100, wobei e + f + g + h = 5 bis 100,

wobei höchstens 50 mol-% der Reste $R^1$ in einem Polyethersiloxan nach Formel 1, jeweils unabhängig voneinander gleiche oder verschiedene Alkylreste mit 6 bis 18 Kohlenstoffatomen sind und wobei das mindestens eine Polyethersiloxan nach Formel 1 in einer Gesamtmenge von 0,1 bis 20 Gewichtsteile, bezogen auf 100 Gewichtsteile des gesamt eingesetzten Phenolharzes, enthalten ist.

(52) Gemeinsame Patentklassifikation (CPC): (Forts.)

C-Sets
**C08L 61/04, C08L 83/12**

## Beschreibung

Die vorliegende Erfindung liegt auf dem Gebiet der Phenolharz-Schaumstoffe. Insbesondere betrifft sie eine Zusammensetzung zur Herstellung von Phenolharz-Schaumstoff, ein Verfahren zur Herstellung von Phenolharz-Schaumstoff, erfindungsgemäß hergestellten Phenolharz-Schaumstoff sowie der Verwendung von Polyethersiloxanen zur Verbesserung der Isolationsfähigkeit von Phenolharz-Schaumstoffen. Unter Phenolharz-Schaumstoff wird im Rahmen der vorliegenden Erfindung insbesondere ein Schaumstoff erhältlich durch Reaktion eines Phenolharzes mit einer Säure als Katalysator unter Zusatz eines Treibmittels und eines Schaumstabilisators verstanden. Phenolharz-Schaumstoffe sind dem Fachmann an sich bekannt und beispielsweise in EP 3830174 A1, DE 602004006376 T2, EP 2898005 A1, EP 1922357 A1, WO 2022043561 A1, EP 4073155 A1, AU 2021238847 A1 oder WO 2006114777 A1 beschrieben. Phenolharz-Schaumstoffe können auch als Phenolharzschäume oder Phenolschäume bezeichnet werden. Diese Begriffe werden synonym gehandhabt. Das gilt auch für diese Erfindung.

Bei der Herstellung von Phenolharz-Schaumstoffen können in der Regel zellstabilisierende bzw. schaumstabilisierende Additive eingesetzt werden, welche für eine feinzellige, gleichmäßige und störungsarme Schaumstruktur sorgen sollen und damit die Gebrauchseigenschaften, insbesondere zum Beispiel das thermische Isolationsvermögen des Schaumes im wesentlichen Maße positiv beeinflussen. Gewöhnlich können hierfür Schaumstabilisatoren eingesetzt werden, wie z.B. Schaumstabilisatoren auf Basis ethoxylierter Pflanzenöle, wie z.B. Rizinusöl, wie z.B. in EP 3830174 A1 beschrieben. Als besonders effektiv hat sich der Einsatz von Polyether-modifizierten Siloxanen, auch als Polyethersiloxane bezeichnet (PES), wie z.B. in WO 2022043561 A1, US 3298973 A, GB 1088056 A, GB 1087056 A, DE 2833002 A1, US 4067829 A, DE 2254305 A1 oder WO 2009/048717 A1 beschrieben, herausgestellt, um die Gebrauchseigenschaften weiter zu verbessern. Insbesondere die Kombination aus ethoxylierten Pflanzenölen und Polyether-modifizierten Siloxanen führt zu guten Gebrauchseigenschaften. Diese Kombination stellt daher einen bei der Herstellung von Phenolharz-Schaumstoff üblicherweise bevorzugten Typ der Schaumstabilisatoren dar.

US 4067829 A, GB 1087056, GB 1088056, US 3298973 A, DE 2254305 A1, WO 2009048717 A1 und DE 2833002 A1 beschreiben den allgemeinen Einsatz von Polyether-modifizierten Siloxanen in Phenolschäumen zur Schaumstabilisierung.

WO 2004/056911 A2 beschreibt den allgemeinen Einsatz von Polyether-modifizierten Siloxanen als Schaumstabilisatoren zur Herstellung geschlossenzelliger Phenolschäume, wobei diese einen Polysiloxangehalt von 25 bis 35 Gew.-%, einen Polyethylenoxidgehalt von 50 bis 55 Gew.-% und einen Polypropylenoxidgehalt von 15 bis 20 Gew.-% aufweisen.

WO 2022/043561 A1 beschreibt den Einsatz von Polyether-modifizierten Siloxanen in Kombination mit ethoxyliertem Rizinusöl zur Herstellung geschlossenzelliger Phenolschäume, wobei diese einen Polyethylenoxidgehalt < 50 Gew.-% aufweisen. Bevorzugt werden dort Polyether-modifizierte Siloxane mit einer molaren Masse von 9.500 bis 25.000 g/mol eingesetzt.

Die genannten Schriften aus dem Stand der Technik enthalten keine Lehre darüber, inwieweit durch einen gezielten Aufbau der Struktur der Polyether-modifizierten Siloxane, z.B. durch Auswahl der Kettenlänge des Polysiloxans, dessen Modifizierungsgrad oder der Zusammensetzung der Polyether-Reste, die Schaumeigenschaften, insbesondere die Wärmeleitfähigkeit und die Alterung der Wärmeleitfähigkeit verbessert werden können.

Vor diesem Hintergrund war es die Aufgabe der vorliegenden Erfindung, die Bereitstellung von Phenolharz-Schaumstoffen zu ermöglichen, welche über bessere Gebrauchseigenschaften verfügen, insbesondere eine bessere Wärmeleitfähigkeit, als die mit herkömmlichen Schaumstabilisatoren hergestellten Phenolharz-Schaumstoffe.

Die Aufgabe wird gelöst vom Gegenstand der Erfindung. Der Gegenstand der Erfindung ist eine Zusammensetzung zur Herstellung von Phenolharz-Schaumstoff, umfassend mindestens ein Phenolharz, mindestens ein Treibmittel, mindestens einen Katalysator sowie mindestens ein Polyethersiloxan nach Formel 1,

$$M_aM^1_bD_cD^1_d \qquad \text{(Formel 1)}$$

mit

M = 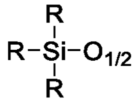 , $M^1$ = 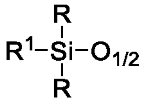 ,

D = 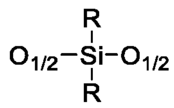 , $D^1$ = 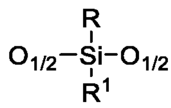 ,

a = 0 bis 2,
b = 0 bis 2,
c = 1 bis 100, vorzugsweise 6 bis 80, besonders bevorzugt 6 bis 60,
d = 0 bis 40, vorzugsweise 1 bis 35, besonders bevorzugt 1 bis 30,
wobei

$$a + b = 2,$$

a + b + c + d = 5 bis 140, bevorzugt 9 bis 100, besonders bevorzugt 14 bis 50
(a + b + c + d) / (b + d) = 5 bis 8,5, vorzugsweise 5 bis 8,0, besonders bevorzugt 5 bis 7,5,
R = jeweils unabhängig voneinander, gleiche oder verschiedene Alkylreste mit 1 bis 16 Kohlenstoffatomen, gleiche oder verschiedene Arylreste mit 6 bis 16 Kohlenstoff-atomen, H oder -O-$R^2$, bevorzugt Methyl, Ethyl, Phenyl oder H, insbesondere Methyl,
$R^2$ = jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H,
$R^1$ = jeweils unabhängig voneinander gleiche oder verschiedene Alkylreste mit 6 bis 18 Kohlenstoffatomen oder gleiche oder verschiedene Polyether-Reste nach Formel 2,

$$-R^3-O-\left[CH_2CH_2O\right]_e\left[CH_2CH(CH_3)O\right]_f\left[CH(CH_3)CH_2O\right]_g\left[CR^4{}_2CR^4{}_2O\right]_h-R^5 \quad \text{(Formel 2)}$$

$R^3$ = jeweils unabhängig voneinander gleiche oder verschiedene divalente Alkylreste mit 2 bis 15 Kohlenstoffatomen, bevorzugt gleiche oder verschiedene divalente Alkylreste mit 3 bis 6 Kohlenstoffatomen, insbesondere bevorzugt $-(CH_2)_3-$,
$R^4$ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Phenyl,

wobei nicht alle 4 Reste $R^4$ in [$CR^4{}_2CR^4{}_2O$] gleich H sind,
und wobei in [$CR^4{}_2CR^4{}_2O$] nicht ein Rest $R^4$ gleich Methyl und die verbleibenden drei Reste $R^4$ gleich H sind,

$R^5$ = jeweils unabhängig voneinander gleiche oder verschiedene Reste ausgewählt aus der Gruppe bestehend aus: $R^2$ und C(O)$R^2$, bevorzugt Methyl, Butyl, H oder C(O)Me, besonders bevorzugt H, Methyl oder C(O)Me,
e = 0 bis 100, bevorzugt 0 bis 80, insbesondere 0 bis 60,
f = 0 bis 100, bevorzugt 0 bis 80, insbesondere 0 bis 60,
g = 0 bis 100, bevorzugt 0 bis 80, insbesondere 0 bis 60,
h = 0 bis 100, bevorzugt 0 bis 60, besonders bevorzugt 0,
wobei e + f + g + h = 5 bis 100, bevorzugt 10 bis 90, besonders bevorzugt 10 bis 80,
wobei höchstens 50 mol-% der Reste $R^1$ in einem Polyethersiloxan nach Formel 1, jeweils unabhängig voneinander gleiche oder verschiedene Alkylreste mit 6 bis 18 Kohlenstoffatomen sind, und wobei das mindestens eine Polyethersiloxan nach Formel 1 in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, enthalten ist.

Der erfindungsgemäße Gegenstand geht mit vielfältigen Vorteilen einher. So ermöglicht er die Bereitstellung von Phenolharz-Schaumstoffen, welche die bekannten Anforderungen erfüllen. Insbesondere verfügen die Phenolharz-Schaumstoffe über sehr gute Isolationseigenschaften und weisen ein hervorragendes Langzeitverhalten sowie eine hohe Oberflächenqualität auf. Vorteilhafterweise wird dies ermöglicht, ohne die sonstigen Eigenschaften des Materials zu beeinträchtigen. Es werden überdies besonders feinzellige, gleichmäßige und störungsarme Schaumstrukturen ermöglicht.

Der erfindungsgemäße Gegenstand ermöglicht die Bereitstellung von Phenolharz-Schaumstoffen, welche über

bessere Gebrauchseigenschaften verfügen, insbesondere eine bessere Wärmeleitfähigkeit, als die mit herkömmlichen Schaumstabilisatoren hergestellten Phenolharz-Schaumstoffe.

Die Erfindung erlaubt vorzugsweise ebenfalls den gemeinsamen Einsatz mit den aus dem Stand der Technik bekannten Si-freien Tensiden, insbesondere den alkoxylierten Pflanzenölen sowie den ethoxylierten Sorbitanfettsäureestern.

Die erfindungsgemäße Zusammensetzung umfasst mindestens ein Polyethersiloxan nach Formel 1. Im Sinne der Erfindung bevorzugt einsetzbare Polyethersiloxane werden in den folgenden bevorzugten Ausführungsformen der Erfindung beschrieben.

Es ist bevorzugt, dass das mindestens eine Polyethersiloxan nach Formel 1 sich dadurch auszeichnet, dass weniger als 100 mol-%, bevorzugt weniger als 70 mol-%, besonders bevorzugt weniger als 50 mol-% aller Reste $R^1$ einen Polyether-Rest der allgemeinen Formel 2 mit f + g + h = 0 enthalten, insbesondere bevorzugt zeichnet sich das mindestens eine Polyethersiloxan nach Formel 1 dadurch aus, dass kein Rest $R^1$ einen Polyether-Rest der allgemeinen Formel 2 mit f + g + h = 0 enthält.

Weiterhin ist es bevorzugt, dass das mindestens eine Polyethersiloxan nach Formel 1 sich dadurch auszeichnet, dass mindestens 25 mol-%, bevorzugt mindestens 50 mol-%, besonders bevorzugt mindestens 75 mol-% aller Reste $R^1$ einen Polyether-Rest der allgemeinen Formel 2 mit $R^5$ = H enthalten. Insbesondere bevorzugt enthalten 80 mol-% bis 100 mol-% aller Reste $R^1$ einen Polyether-Rest der allgemeinen Formel 2 mit $R^5$ = H.

Es ist ebenfalls bevorzugt, dass das mindestens eine Polyethersiloxan nach Formel 1 sich dadurch auszeichnet, dass mindestens 30 mol-%, bevorzugt mindestens 40 mol-%, besonders bevorzugt mindestens 50 mol-% aller Reste $R^1$ einen Polyether-Rest der allgemeinen Formel 2 enthalten, mit e + f + g = 17 bis 60, bevorzugt 19 bis 40,

(f + g) / (e + f + g) > 0 bis 0,6, bevorzugt 0,1 bis 0,5, besonders bevorzugt 0,15 bis 0,4
und
h = 0.

Vorzugsweise enthält das mindestens eine Polyethersiloxan nach Formel 1 mindestens 2 verschiedene Reste $R^1$.

Es ist bevorzugt, dass das mindestens eine Polyethersiloxan nach Formel 1 sich dadurch auszeichnet, dass es mindestens zwei verschiedene Reste $R^1$ enthält, wobei mindestens ein Rest $R^1$ ein Polyether-Rest nach Formel 2 und ein Rest $R^1$ ein Alkylrest mit 6 bis 18 Kohlenstoffatomen ist, wobei höchstens 50 mol-%, bevorzugt höchstens 25 mol-%, aller Reste $R^1$, Alkylreste mit 6 bis 18 Kohlenstoffatomen sind.

Die erfindungsgemäße Zusammensetzung umfasst mindestens ein Treibmittel, vorzugsweise ausgewählt aus der Gruppe bestehend aus

- Kohlenwasserstoffen mit 3, 4 oder 5 Kohlenstoff-Atomen, bevorzugt cyclo-, iso- und/oder n-Pentan
  und
- halogenierten Kohlenwasserstoffen mit 3, 4 oder 5 Kohlenstoff-Atomen, bevorzugt Isopropylchlorid, Hydrofluoroolefine oder Hydrohaloolefine, bevorzugt 1234ze, 1234yf, 1224yd, 1233zd(E) und/oder 1336mzz.

Weiterhin ist es bevorzugt, dass die erfindungsgemäße Zusammensetzung zusätzlich mindestens ein Silizium-freies Tensid vorzugsweise in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthält, vorzugsweise ausgewählt aus der Gruppe bestehend aus alkoxyliertem Pflanzenöl und ethoxyliertem Sorbitanfettsäureester.

Vorzugsweise handelt es sich bei dem alkoxylierten Pflanzenöl um ethoxyliertes Pflanzenöl, bevorzugt ethoxyliertes Rizinusöl, und vorzugsweise ist alkoxyliertes Pflanzenöl in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthalten.

Es ist bevorzugt, dass das alkoxylierte Pflanzenöl, 15 bis 50 mol Alkylenoxid, bevorzugt 20 bis 45 mol Alkylenoxid, bezogen auf 1 mol Pflanzenöl enthält.

Vorzugsweise handelt es sich bei dem ethoxylierten Sorbitanfettsäureester um Polysorbat 20, Polysorbat 40 und/oder Polysorbat 80 und vorzugsweise ist der ethoxylierte Sorbitanfettsäureester in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthalten.

Die erfindungsgemäße Zusammensetzung umfasst mindestens einen Katalysator. Es ist bevorzugt, dass der mindestens eine Katalysator ausgewählt ist aus der Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

Es ist bevorzugt, dass der mindestens eine Katalysator in einer Gesamtmenge von 1 bis 30 Gewichtsteile,

vorzugsweise 1 bis 25 Gewichtsteile, besonders bevorzugt 3 bis 20 Gewichtsteile, bezogen auf 100 Gewichtsteile des gesamt eingesetzten Phenolharzes, enthalten ist.

Die erfindungsgemäße Zusammensetzung umfasst mindestens ein Phenolharz. Vorzugsweise weist das mindestens eine Phenolharz einen Wassergehalt von 1 bis 25 Gew.-%, bevorzugt 4 bis 19 Gew.-%, bezogen auf das gesamt eingesetzte Phenolharz, auf.

Eine besonders bevorzugte Phenolschaum-Formulierung im Sinne dieser Erfindung ergibt ein Raumgewicht von 5 bis 900 $kg/m^3$ und hat vorzugweise die in Tabelle 1 genannte Zusammensetzung, die einer bevorzugten Ausführungsform der Erfindung entspricht:

Tabelle 1: Zusammensetzung einer bevorzugten Phenolschaumformulierung

| **Komponente** | **Gewichtsteile** |
|---|---|
| Phenolharz | 80 bis 120 |
| Treibmittel | >0 bis 50 |
| Katalysator | 1 bis 30 |
| erfindungsgemäßes Polyethersiloxan nach Formel 1 | >0 bis 15 |
| Optional weitere Additive (Flammschutzmittel etc.) | 0 bis 100 |

Ein weiterer Gegenstand der vorliegenden Erfindung ist ein Verfahren zur Herstellung von Phenolharz-Schaumstoff, welches unter Einsatz einer Reaktionsmischung, enthaltend eine erfindungsgemäße Zusammensetzung wie zuvor beschrieben, insbesondere wie in einem der Ansprüche 1 bis 14 definiert, erfolgt.

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der vorliegenden Erfindung ist ein Phenolharz-Schaumstoff, hergestellt gemäß des zuvor genannten erfindungsgemäßen Verfahrens, vorzugsweise unter Einsatz einer erfindungsgemäßen Zusammensetzung, insbesondere wie in einem der Ansprüche 1 bis 14 definiert.

Es ist bevorzugt, dass der Phenolharz-Schaumstoff eine Dichte nach ASTM D1622-2020 von 5 bis 500 $kg/m^3$, bevorzugt 10 bis 200 $kg/m^3$, insbesondere bevorzugt von 12 bis 100 $kg/m^3$ aufweist.

Ein weiterer Gegenstand der Erfindung ist die Verwendung des erfindungsgemäßen Phenolharz-Schaumstoffs zur thermischen Isolation.

Ein weiterer Gegenstand der Erfindung ist die Verwendung von mindestens einem Polyethersiloxan nach Formel 1 bei der Herstellung von Phenolharz-Schaumstoffen, vorzugsweise unter Einsatz einer erfindungsgemäßen Zusammensetzung, insbesondere wie in einem der Ansprüche 1 bis 14 definiert.

Ein weiterer Gegenstand der Erfindung ist die Verwendung von mindestens einem Polyethersiloxan nach Formel 1 bei der Herstellung von Phenolharz-Schaumstoffen zur Verbesserung der Isolationsfähigkeit von Phenolharz-Schaumstoffen, vorzugsweise Phenolharz-Schaumstoffen nach Anspruch 16, bevorzugt hergestellt unter Einsatz einer Zusammensetzung nach einem der Ansprüche 1 bis 14.

Nachfolgend werden besonders bevorzugte erfindungsgemäße Zusammensetzungen genauer beschrieben.

Eine besonders bevorzugte erfindungsgemäße Zusammensetzung enthält die folgenden Bestandteile:

- mindestens ein Phenolharz,
- mindestens ein Treibmittel,
- mindestens ein Katalysator,
- mindestens ein Polyethersiloxan nach Formel 1
- optional weitere Additive, etc.

Die Herstellung von Phenolharz-Schaumstoffen (diese können synonym auch als Phenolschäume bezeichnet werden) ist dem Fachmann an sich bekannt. Für die Herstellung von Phenolharz-Schaumstoffen werden ein oder mehrere Phenolharze, vorzugsweise ein oder mehrere sogenannte Resolharze, verwendet. Entsprechend einsetzbare Phenolharze, vorzugsweise Resolharze, sind an sich bekannt. Insbesondere können sie in bekannter Weise durch Kondensation von Phenol oder einer phenolbasierten Verbindung wie zum Beispiel Kresol, Xylenol, para-Alkylphenol, para-Phenylphenol, Resorcin oder dergleichen und einem Aldehyd wie zum Beispiel Formaldehyd, Furfural, Acetaldehyd oder dergleichen unter vorzugsweise basischen Bedingungen, zum Beispiel durch Einsatz einer katalytische Menge an Alkalihydroxiden, wie z.B. Natriumhydroxid, Kaliumhydroxid oder Calciumhydroxid oder einem aliphatischen Amin, wie z.B. Trimethylamin oder Triethylamin, bevorzugt mit einem Überschuss an Aldehyd hergestellt werden. Dies stellt den üblichen Weg zur Herstellung von Phenolharzen, vorzugsweise Resolharzen dar, wobei die Erfindung nicht nur auf die

gerade zuvor aufgeführten Chemikalien beschränkt ist.

Das molare Verhältnis von Phenolgruppen zu Aldehydgruppen unterliegt dabei keiner Beschränkung. Bevorzugt liegt das Verhältnis in einem Bereich von 1:1 bis 1:3, besonders bevorzugt in einem Bereich von 1:1,5 bis 1:2,5. Vorzugsweise, aber nicht beschränkt darauf, hat das Phenolharz einen freien Aldehydgehalt von 0,1 Gew.-% bis 0,5 Gew.-%. Dieser kann mittels potentiometrischer Titration nach ISO 11402:2004 mit Hydroxylaminhydrochlorid bestimmt werden.

Bevorzugt einsetzbare Phenolharze, die bei der Schaumherstellung verwendet werden können, sind bei 25 °C und Normaldruck Flüssigkeiten, und zwar vorzugsweise mit Wasserkonzentrationen von etwa 1 bis 25 Gew.-%, bevorzugt 5 bis 20 Gew.-%, und verfügen vorzugsweise über Methylolgruppen als reaktive Substituenten, wie beispielsweise in EP 0170357 B1 beschrieben. Sofern gewünscht, kann die Viskosität des Phenolharzes unter anderem z.B. durch den Wassergehalt eingestellt werden. So können z.B. hohe Wassergehalte gewöhnlich zu einer niedrigeren Viskosität führen und können z.B. so sowohl die Handhabung des Harzes als auch das Mischen während der Schaumherstellung erleichtern.

Unter Normaldruck wird ein Druck von 101325 Pa verstanden.

Die Viskosität bevorzugt einsetzbarer Phenolharze bei 25 °C und Normaldruck liegt vorzugsweise in einem Bereich von 1000 bis 28000 mPa*s und kann durch die üblichen dem Fachmann bekannten Methoden wie z.B. mittels Brookfield Viskosimeter bestimmt werden. Allgemeines zur Herstellung und Zusammensetzung von Phenolharzen ist dem Stand der Technik entnehmbar und beispielsweise in EP 3830174 A1, EP 2898005 A1, WO 2022043561 A1 oder EP 4073155 A1 beschrieben.

Treibmittel und deren Einsatz bei der Herstellung von Phenolharz-Schaumstoffen sind dem Fachmann bekannt. Deren Auswahl kann z.B. abhängig sein von der Art des Systems und der Anwendung des erhaltenen Phenolharz-Schaumstoffs. Je nach Menge des verwendeten Treibmittels kann z.B. ein Schaum mit hoher oder niedriger Dichte hergestellt werden. So können Schäume z.B. mit Dichten von vorzugsweise 5 kg/$m^3$ bis 900 kg/ $m^3$, bevorzugt 5 bis 500 kg/ $m^3$, besonders bevorzugt 10 bis 200 kg/$m^3$, insbesondere 12 bis 100 kg/$m^3$ nach ASTM D1622-20 hergestellt werden.

Besonders bevorzugt einsetzbare Treibmittel wurden oben bereits beschrieben. Als mögliche Treibmittel können z.B. eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso- oder n-Pentan, halogenierte Kohlenwasserstoffe wie zum Beispiel chlorierte Kohlenwasserstoffe wie Dichlorethan, 1,2-Dichlorethen, n-Propylchlorid, Isopropylchlorid, Butylchlorid, Isobutylchlorid, Pentylchlorid, Isopentylchlorid, 1,1-Dichlorethen, Trichlorethen oder Chlorethen oder Fluorkohlenwasserstoffe (HFC), wie zum Beispiel HFC 245fa, HFC 134a oder HFC 365mfc, Hydrofluoroolefine (HFO) oder Hydrohaloolefine, bevorzugt 1234ze, 1234yf, 1224yd, 1233zd(E) oder 1336mzz sowie deren Mischungen eingesetzt werden.

Besonders bevorzugt einsetzbare Katalysatoren wurden oben bereits beschrieben. Katalysatoren, die für die Herstellung von Phenolharz-Schaumstoffen einsetzbar sind, sind dem Fachmann z.B. auch aus dem Stand der Technik bekannt und beispielsweise in EP 0170 357 A1 oder z.B. in DE 602004006376 T2 beschrieben. Hierbei kann vorzugsweise auf die üblichen aus dem Stand der Technik bekannten organischen und anorganischen Säuren zurückgegriffen werden. Vorzugsweise können eine oder mehrere Säuren eingesetzt werden. Besonders bevorzugt einsetzbar sind Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und/oder Phenolsulfonsäure. Insbesondere können als Katalysatoren Gemische mehrerer dieser Verbindungen eingesetzt werden. Die bevorzugte Einsatzmenge der Katalysatoren für eine vollständige Reaktion kann unter anderem durch den Wassergehalt des Phenolharzes und/oder wenn der Katalysator als wässrige Lösung vorliegt auch durch dessen Wassergehalt beeinflusst werden. Beispielsweise kann bei höherem Wassergehalt eine höhere Säurekonzentration erforderlich sein.

Phenolharz-Schaumstoff kann auf bekannte Weise, also insbesondere durch Reaktion einer Mischung umfassend Phenolharz, Treibmittel, Schaumstabilisator und Katalysator gebildet werden. Bei Zugabe eines Katalysators zu einem Gemisch aus Phenolharz, Treibmittel und Schaumstabilisator kommt es zu einer exothermen Reaktion zwischen den Methylolgruppen und Phenol, was zur Bildung von Methylenbrücken und zur Vernetzung führt. Dabei wird durch die Kondensation Wasser freigesetzt. Beispielsweise können die Art und Menge der eingesetzten Säure, die Eigenschaften des Treibmittels und die Struktur des Schaumstabilisators dabei die Exothermie der Reaktion und die Schaumbildung beeinflussen.

Schaumstabilisatoren und deren Einsatz bei der Herstellung von Phenolharz-Schaumstoffen sind dem Fachmann, wie oben beschrieben, allgemein bekannt. Erfindungsgemäß wird mindestens ein Polyethersiloxan nach Formel 1 eingesetzt. Das mindestens eine Polyethersiloxan nach Formel 1 fungiert als Schaumstabilisator. Daneben können auch zusätzliche Schaumstabilisatoren eingesetzt werden, die die Schaumherstellung unterstützen. Diese Verbindungen sind aus dem Stand der Technik hinreichend bekannt. So wird beispielsweise in EP 3830174 A1 der Einsatz von ethoxyliertem Rizinusöl beschrieben.

Als optionale Additive können eine oder mehrere der nach dem Stand der Technik bekannten Substanzen verwendet werden, die bei der Herstellung von Phenolharz-Schaumstoffen üblicherweise Verwendung finden können,

wie zum Beispiel Viskositätserniedriger, Weichmacher, Härter, Flammschutzmittel, zellverfeinernde Additive, Füllstoffe, Farbstoffe, Pigmente und/oder Duftstoffe. Geeignete optionale Additive sind zum Beispiel in EP 3830174 A1, US 4444912 A sowie EP 1922357 A1 beschrieben.

Als optionale feste Füllstoffe können zum Beispiel Metallhydroxide, wie Aluminiumhydroxid oder Magnesiumhydroxid, Metallcarbonate, wie Calciumcarbonat, Magensiumcarbonat, Bariumcarbonat oder Zinkcarbonat, Metalloxide, wie Aluminiumoxid oder Zinkoxid oder Metallpulver, wie Zink verwendet werden. Zur Verringerung der Viskosität des Phenolharzes können zum Beispiel Monoethylenglykol oder Polyesterpolyole optional eingesetzt werden. Als optionale Härter können zum Beispiel Verbindungen mit Aminogruppen wie Harnstoff oder Dicyandiamid eingesetzt werden. Vorzugsweise kann Harnstoff eingesetzt werden. Diese können z.B. bei der Verschäumung als auch bereits bei der Herstellung des Phenolharzes eingesetzt werden.

Das erfindungsgemäße Verfahren zur Herstellung von Phenolharz-Schaumstoffen kann nach allen bekannten Methoden durchgeführt werden. Diese sind dem Fachmann bekannt und z.B. auch in der Patentliteratur, darunter z.B. EP 3830174 A1, beschrieben.

Wenn aus dieser Beschreibung nichts anderes hervorgeht, dann kann jegliche bevorzugte oder besonders bevorzugte Ausführungsform der Erfindung mit einer oder mehreren der übrigen bevorzugten oder besonders bevorzugten Ausführungsformen der Erfindung kombiniert werden.

Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden Mittelwerte angegeben, so handelt es sich, wenn nicht anders angegeben, um Zahlenmittel. Werden Parameter angegeben, die durch Messung bestimmt wurden, so wurden die Messungen, wenn nicht anders angegeben, bei einer Temperatur von 23 °C und vorzugsweise bei einem Druck von 101325 Pa durchgeführt.

Die Erfindung wird nachfolgend anhand von Beispielen weiter beispielhaft beschrieben, ohne die Erfindung dadurch in irgendeiner Form zu beschränken.

**Beispiele:**

Die Polyethersiloxane wurden wie nachfolgend beschrieben hergestellt und anwendungstechnisch untersucht.

Als Katalysator für die Hydrosilylierung diente eine Platin(0)-1,3-divinyl-1,1,3,3-tetramethyldisiloxan-Komplex -Lösung in Xylol (w (Pt) = 2 %). Die CAS-Nummer des Komplexes ist 68478-92-2. Der Katalysator wurde von Sigma-Aldrich bezogen und wie erhalten verwendet.

Die verwendeten SiH-funktionellen Siloxane wurden analog wie in Beispiel 1 der Patentanmeldung DE 10 2008 042 181 beschrieben hergestellt.

Die prinzipielle Herstellung von Allylpolyethern ist dem Fachmann bestens bekannt und beispielsweise in Beispiel 1 der Patentanmeldung EP4314111A1 beschrieben. Als Startalkohol wurde analog dazu Allylalkohol verwendet.

Alle Reaktionen wurden mit Hilfe der Schlenktechnik unter Verwendung von Stickstoff als Schutzgas durchgeführt.

*Beispiel 1: Herstellung PES 1*

Zur Synthese des Polyethersiloxans PES 1 wurden 64 g eines SiH-funktionellen Siloxans der Formel $Me_3SiO(SiMe_2O)_{38}(SiMeHO)_{10}SiMe_3$ mit 36 g eines Polyethers der Formel $CH_2=CHCH_2O(CH_2CH_2O)_9(CH_2CH(CH_3)O)_1H$, 106 g eines Polyethers der Formel $CH_2=CHCH_2O(CH_2CH_2O)_{11}(CH_2CH(CH_3)O)_{10}H$ und 94 g eines Polyethers der Formel $CH_2=CHCH_2O(CH_2CH_2O)_{23}(CH_2CH(CH_3)O)_4H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex - Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 2: Herstellung PES 2*

Zur Synthese des Polyethersiloxans PES 2 wurden 84 g eines SiH-funktionellen Siloxans der Formel $HMe_2SiO(SiMe_2O)_{40}(SiMeHO)_8SiMe_2H$ mit 38 g eines Polyethers der Formel $CH_2=CHCH_2O(CH_2CH_2O)_9(CH_2CH(CH_3)O)_1H$ und 178 g eines Polyethers der Formel $CH_2=CHCH_2O(CH_2CH_2O)_{12}(CH_2CH(CH_3)O)_7H$ in einem

500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 3: Herstellung PES 3*

Zur Synthese des Polyethersiloxans PES 3 wurden 58 g eines SiH-funktionellen Siloxans der Formel $Me_3SiO(SiMe_2O)_{14}(SiMeHO)_4SiMe_3$ mit 112 g eines Polyethers der Formel $CH_2{=}CHCH_2O(CH_2CH_2O)_{23}(CH_2CH(CH_3)O)_4H$ und 130 g eines Polyethers der Formel $CH_2{=}CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90°C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 4: Herstellung PES 4*

Zur Synthese des Polyethersiloxans PES 4 wurden 61 g eines SiH-funktionellen Siloxans der Formel $Me_3SiO(SiMe_2O)_{14}(SiMeHO)_4SiMe_3$ mit 101g eines Polyethers der Formel $CH_2{=}CHCH_2O(CH_2CH_2O)_{11}(CH_2CH(CH_3)O)_{10}H$ und 138 g eines Polyethers der Formel $CH_2{=}CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90°C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 5: Herstellung PES 5*

Zur Synthese des Polyethersiloxans PES 5 wurden 51 g eines SiH-funktionellen Siloxans der Formel $Me_3SiO(SiMe_2O)_{38}(SiMeHO)_{10}SiMe_3$ mit 132 g eines Polyethers der Formel $CH_2{=}CHCH_2O(CH_2CH_2O)_{22}(CH_2CH(CH_3)O)_{11}H$ und 116 g eines Polyethers der Formel $CH_2{=}CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90°C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 6: Herstellung PES 6*

Zur Synthese des Polyethersiloxans PES 6 wurden 52 g eines SiH-funktionellen Siloxans der Formel $Me_3SiO(SiMe_2O)_{14}(SiMeHO)_4SiMe_3$ mit 132 g eines Polyethers der Formel $CH_2{=}CHCH_2O(CH_2CH_2O)_{22}(CH_2CH(CH_3)O)_{11}H$ und 116 g eines Polyethers der Formel $CH_2{=}CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 7: Herstellung PES 7*

Zur Synthese des Polyethersiloxans PES 7 wurden 75 g eines SiH-funktionellen Siloxans der Formel $HMe_2SiO(SiMe_2O)_{55}(SiMeHO)_8SiMe_2H$ mit 225 g eines Polyethers der Formel $CH_2{=}CHCH_2O(CH_2CH_2O)_{23}(CH_2CH(CH_3)O)_4H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 8: Herstellung PES 8*

Zur Synthese des Polyethersiloxans PES 8 wurden 57 g eines SiH-funktionellen Siloxans der Formel $Me_3SiO(SiMe_2O)_{38}(SiMeHO)_{10}SiMe_3$ mit 113 g eines Polyethers der Formel $CH_2=CHCH_2O(CH_2CH_2O)_{23}(CH_2CH(CH_3)O)_4H$ und 130 g eines Polyethers der Formel $CH_2=CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 9: Herstellung PES 9*

Zur Synthese des Polyethersiloxans PES 9 wurden 66 g eines SiH-funktionellen Siloxans der Formel $Me_3SiO(SiMe_2O)_{123}(SiMeHO)_{25}SiMe_3$ mit 108 g eines Polyethers der Formel $CH_2=CHCH_2O(CH_2CH_2O)_{23}(CH_2CH(CH_3)O)_4H$ und 125 g eines Polyethers der Formel $CH_2=CHCH_2O(CH_2CH_2O)_{12}(CH_2CH(CH_3)O)_7H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 10: Herstellung PES 10*

Zur Synthese des Polyethersiloxans PES 10 wurden 131 g eines SiH-funktionellen Siloxans der Formel $HMe_2SiO(SiMe_2O)_{37,1}(SiMeHO)_{2,9}SiMe_2H$ mit 168 g eines Polyethers der Formel $CH_2=CHCH_2O(CH_2CH_2O)_{12}(CH_2CH(CH_3)O)_7CH_3$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 11: Herstellung PES 11*

Zur Synthese des Polyethersiloxans PES 11 wurden 110 g eines SiH-funktionellen Siloxans der Formel $Me_3SiO(SiMe_2O)_{51}(SiMeHO)_7SiMe_3$ mit 190 g eines Polyethers der Formel $CH_2=CHCH_2O(CH_2CH_2O)_{13}(CH_2CH(CH_3)O)_3H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 12: Herstellung PES 12*

Zur Synthese des Polyethersiloxans PES 12 wurden 148 g eines SiH-funktionellen Siloxans der Formel $Me_3SiO(SiMe_2O)_{65}(SiMeHO)_8SiMe_3$ mit 151 g eines Polyethers der Formel $CH_2=CHCH_2O(CH_2CH_2O)_{10}H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex -Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 13: Herstellung PES 13*

Zur Synthese des Polyethersiloxans PES 13 wurden 126 g eines SiH-funktionellen Siloxans der Formel $Me_3SiO(SiMe_2O)_{108}(SiMeHO)_{10}SiMe_3$ mit 174 g eines Polyethers der Formel $CH_2=CHCH_2O(CH_2CH_2O)_5$

$(CH_2CH(CH_3)O)_{11}H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 14: Herstellung PES 14*

Zur Synthese des Polyethersiloxans PES 14 wurden 121 g eines SiH-funktionellen Siloxans der Formel $Me_3SiO(SiMe_2O)_{21}(SiMeHO)_2SiMe_3$ mit 89 g eines Polyethers der Formel $CH_2=CHCH_2O(CH_2CH_2O)_{12}(CH_2CH(CH_3)O)_7H$ und 89 g eines Polyethers der Formel $CH_2=CHCH_2O(CH_2CH_2O)_{12}(CH_2CH(CH_3)O)_7Me$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

*Beispiel 15: Herstellung PES 15*

Zur Synthese des Polyethersiloxans PES 15 wurden 89 g eines SiH-funktionellen Siloxans der Formel $Me_3SiO(SiMe_2O)_{28}(SiMeHO)_{10}SiMe_3$ mit 211 g eines Polyethers der Formel $CH_2=CHCH_2O(CH_2CH_2O)_{10}H$ in einem 500 mL-Vierhalskolben mit KPG-Rührer, Thermometer, Rückflußkühler und Stickstoffeinleitung miteinander gemischt. Die Mischung wurde auf 90 °C erwärmt. Anschließend wurden 0,15 g einer Platin(0)-1,3-divinyl-1,1,3,3-tetramethyldisiloxan-Komplex-Lösung in Xylol zugesetzt. Daraufhin setzte eine exotherme Reaktion ein. Anschließend wurde das Reaktionsgemisch zwei Stunden lang bei 90 °C gerührt. Nach dieser Zeit wurde der Umsetzungsgrad der SiH-Gruppen gasvolumetrisch bestimmt. Er betrug 100 %. Es wurde ein klares Produkt erhalten.

Tabelle 2: Zusammensetzung der Polyethersiloxane (PES)

| **PES** | **Erfindungsgemäß** | **M* kg/mol** | **Polysiloxangehalt* Gew.-%** | **Polyethylenoxidgehalt* Gew.-%** | **Polypropylenoxidgehalt* Gew.-%** |
|---|---|---|---|---|---|
| PES 1 | ja | 13,4 | 26,8 | 46,1 | 24,0 |
| PES 2 | ja | 12,0 | 29,6 | 40,2 | 26,7 |
| PES 3 | ja | 5,9 | 24,3 | 49,2 | 23,6 |
| PES 4 | ja | 5,6 | 25,7 | 36,2 | 35,1 |
| PES 5 | ja | 16,4 | 21,9 | 43,6 | 32,0 |
| PES 6 | ja | 6,6 | 22,0 | 43,5 | 31,9 |
| PES 7 | ja | 17,7 | 26,5 | 58,3 | 12,8 |
| PES 8 | ja | 14,8 | 24,2 | 49,3 | 23,6 |
| PES 9 | nein | 38,8 | 27,8 | 47,0 | 22,5 |
| PES 10 | nein | 7,9 | 38,5 | 31,9 | 26,1 |
| PES 11 | nein | 9,9 | 43,9 | 42,5 | 10,6 |

(fortgesetzt)

| PES | Erfindungsgemäß | M* kg/mol | Polysiloxangehalt* Gew.-% | Polyethylenoxidgehalt* Gew.-% | Polypropylenoxidgehalt* Gew.-% |
|---|---|---|---|---|---|
| PES 12 | nein | 9,6 | 57,0 | 39,4 | 0 |
| PES 13 | nein | 17,8 | 49,4 | 12,1 | 36,2 |
| PES 14 | nein | 3,8 | 47,9 | 27,2 | 22,3 |
| PES 15 | nein | 7,8 | 36,2 | 58,4 | 0 |

*Die angegebenen Werte entsprechen den theoretisch erhaltenen Werten basierend auf der Zusammensetzung der SiH-Siloxane und Polyether.

**Herstellung des Phenolharz-Schaumstoffs**

Für den anwendungstechnischen Vergleich wurde die in Tabelle 3 dargestellte Formulierung verwendet. Die Durchführung der Vergleichsverschäumungen erfolgte im Handmischverfahren. Dazu wurden Phenolharz (Ansatzmenge 180 ± 5 g) und Schaumstabilisator in einen Becher eingewogen und mit einem Tellerrührer (6 cm Durchmesser) 15 s bei 20 °C und 1000 rpm vermischt. Danach wurde das Treibmittel zugegeben, für 30 s bei 1500 rpm vermischt. Anschließend wurde die Säure zugegeben, die Mischung bei 2500 rpm für 30 s verrührt und in eine auf 60 °C thermostatisierte Aluminiumform von 25 cm x 25 cm x 7 cm Größe überführt, welche mit Polyethylenfolie ausgekleidet war. Nach 30 min wurden die Schaumstoffe entformt und 42 h in einem auf 60 °C beheizten Ofen ausgehärtet.

Die Offenzelligkeit wurde mittels Pycnometer vom Typ AccuPyc II Series in einer $100cm^3$ Messkammer und einem 5x3x3cm Probenkörper bestimmt. Die initiale Wärmeleitfähigkeit (λ-Wert in mW/m·K) wurde an 2,5 cm dicken Scheiben mit einem Gerät vom Typ LaserComp FOX200 bei einer mittleren Temperatur von 23°C entsprechend den Vorgaben der Norm EN12667:2001 unmittelbar nach Abkühlung auf Raumtemperatur nach der Aushärtung im Ofen gemessen. Zur Bestimmung der Alterungswerte wurden die Probekörper bei 70 °C für 7 Tage im Ofen gelagert und anschließend die Wärmeleitfähigkeit, wie oben beschrieben, erneut bestimmt.

Tabelle 3: Formulierung zur Herstellung von Phenolharz-Schaumstoff

| Komponente | Gewichtsteile |
|---|---|
| Phenolharz* | 100 |
| Schaumstabilisator | 4,5 |
| Cyclopentan / Isopentan 85/15** | 10 |
| Phenolsulfonsäure 65 Gew.-% in Wasser | 18 |
| *Phenolharz Cellobond® J6014L der Firma Bakelite<br>**Gewichtsteile der Mischung Cyclopentan und Isopentan | |

Die erfindungsgemäßen Polyethersiloxan-Schaumstabilisatoren wurden sowohl einzeln als auch in Kombination mit Si-freien Tensiden untersucht. Hierzu wurde TAGAT® CH 40 als ethoxyliertes Rizinusöl der Firma Evonik Operations GmbH und Polysorbat 80 verwendet. Die Ergebnisse sind in Tabelle 4 dargestellt.

Tabelle 4: Eigenschaften der Phenolharz-Schaumstoffe

| Schaumstabilisator | Offenzelligkeit in % | λ (initial) in mW/mK | λ (Alterung) in mW/mK |
|---|---|---|---|
| PES 1 | 8 | 20,2 | 23,1 |
| TAGAT® CH 40 / PES 1 (3,5:1,0) * | 7 | 19,7 | 23,9 |
| Polysorbat 80 / PES 1 (3,5:1,0) * | 7 | 20,2 | 23,9 |
| PES 2 | 6 | 19,7 | 23,0 |

(fortgesetzt)

| Schaumstabilisator | Offenzelligkeit in % | λ (initial) in mW/mK | λ (Alterung) in mW/mK |
|---|---|---|---|
| PES 3 | 7 | 19,9 | 21,7 |
| TAGAT® CH 40 / PES 3 (3,5:1,0) * | 6 | 19,6 | 22,8 |
| Polysorbat 80 / PES 3 (3,5:1,0) * | 8 | 20,5 | 23,4 |
| PES 4 | 8 | 20,4 | 22,7 |
| PES 5 | 7 | 20,2 | 22,1 |
| PES 6 | 7 | 20,0 | 22,1 |
| PES 7 | 6 | 20,2 | 23,7 |
| TAGAT® CH 40 / PES 7 (3,5:1,0) * | 8 | 19,4 | 23,2 |
| Polysorbat 80 / PES 7 (3,5:1,0) * | 6 | 19,9 | 23,6 |
| PES 8 | 6 | 19,6 | 22,4 |
| TAGAT® CH 40 / PES 8 (3,5:1,0) * | 6 | 19,7 | 22,9 |
| Polysorbat 80 / PES 8 (3,5:1,0) * | 6 | 20,0 | 23,2 |
| PES 9 | 10 | 20,8 | 29,1 |
| PES 10 | 11 | 21,5 | 27,8 |
| PES 11 | 11 | 22,9 | 33,0 |
| PES 12 | 53 | 24,7 | 33,8 |
| PES 13 | Kollaps | Kollaps | Kollaps |
| PES 14 | 20 | 26,0 | 33,1 |
| PES 15 | 25 | 24,6 | 30,8 |
| *Mischungsverhältnisse entsprechen Gewichtsteilen. | | | |

Die Ergebnisse zeigen, dass mit den erfindungsgemäßen Schaumstabilisatoren Schaumqualitäten und Wärmeleitfähigkeiten erzielt werden können, die über denen von nicht erfindungsgemäßen Schaumstabilisatoren liegen. Insbesondere die für die Anwendung entscheidenden gealterten λ-Werte zeigen eine deutliche Verbesserung. Alle anderen für den Gebrauch relevanten Schaumeigenschaften werden durch die erfindungsgemäßen Schaumstabilisatoren nicht oder nur unwesentlich beeinflusst.

## Patentansprüche

1. Zusammensetzung zur Herstellung von Phenolharz-Schaumstoff, umfassend mindestens ein Phenolharz, mindestens ein Treibmittel, mindestens einen Katalysator sowie mindestens ein Polyethersiloxan nach Formel 1,

$$M_aM^1_bD_cD^1_d \qquad \text{(Formel 1)}$$

mit

M = 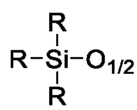 , $M^1$ = 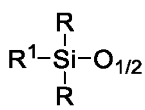 ,

D = 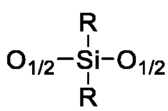 , $D^1$ = 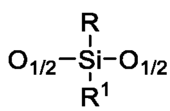 ,

a = 0 bis 2,
b = 0 bis 2,
c = 1 bis 100, vorzugsweise 6 bis 80, besonders bevorzugt 6 bis 60,
d = 0 bis 40, vorzugsweise 1 bis 35, besonders bevorzugt 1 bis 30,
wobei

$$a + b = 2,$$

a + b + c + d = 5 bis 140, bevorzugt 9 bis 100, besonders bevorzugt 14 bis 50
(a + b + c + d) / (b + d) = 5 bis 8,5, vorzugsweise 5 bis 8,0, besonders bevorzugt 5 bis 7,5,
R = jeweils unabhängig voneinander, gleiche oder verschiedene Alkylreste mit 1 bis 16 Kohlenstoffatomen, gleiche oder verschiedene Arylreste mit 6 bis 16 Kohlenstoff-atomen, H oder -O-$R^2$, bevorzugt Methyl, Ethyl, Phenyl oder H, insbesondere Methyl,
$R^2$ = jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H,
$R^1$ = jeweils unabhängig voneinander gleiche oder verschiedene Alkylreste mit 6 bis 18 Kohlenstoffatomen oder gleiche oder verschiedene Polyether-Reste nach Formel 2,

$$-R^3-O-[CH_2CH_2O]_e-[CH_2CH(CH_3)O]_f-[CH(CH_3)CH_2O]_g-[CR^4_2CR^4_2O]_h-R^5 \quad \text{(Formel 2)}$$

$R^3$ = jeweils unabhängig voneinander gleiche oder verschiedene divalente Alkylreste mit 2 bis 15 Kohlenstoffatomen, bevorzugt gleiche oder verschiedene divalente Alkylreste mit 3 bis 6 Kohlenstoffatomen, insbesondere bevorzugt $-(CH_2)_3-$,
$R^4$ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Phenyl,

wobei nicht alle 4 Reste $R^4$ in $[CR^4_2CR^4_2O]$ gleich H sind,
und wobei in $[CR^4_2CR^4_2O]$ nicht ein Rest $R^4$ gleich Methyl und die verbleibenden drei Reste $R^4$ gleich H sind,

$R^5$ = jeweils unabhängig voneinander gleiche oder verschiedene Reste ausgewählt aus der Gruppe bestehend aus: $R^2$ und C(O)$R^2$, bevorzugt Methyl, Butyl, H oder C(O)Me, besonders bevorzugt H, Methyl oder C(O)Me,
e = 0 bis 100, bevorzugt 0 bis 80, insbesondere 0 bis 60,
f = 0 bis 100, bevorzugt 0 bis 80, insbesondere 0 bis 60,
g = 0 bis 100, bevorzugt 0 bis 80, insbesondere 0 bis 60,
h = 0 bis 100, bevorzugt 0 bis 60, besonders bevorzugt 0,
wobei e + f + g + h = 5 bis 100, bevorzugt 10 bis 90, besonders bevorzugt 10 bis 80,
wobei höchstens 50 mol-% der Reste $R^1$ in einem Polyethersiloxan nach Formel 1, jeweils unabhängig voneinander gleiche oder verschiedene Alkylreste mit 6 bis 18 Kohlenstoffatomen sind und wobei das mindestens eine Polyethersiloxan nach Formel 1 in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, enthalten ist.

2. Zusammensetzung nach Anspruch 1, **dadurch gekennzeichnet, dass** das mindestens eine Polyethersiloxan nach Formel 1 sich dadurch auszeichnet, dass weniger als 100 mol-%, bevorzugt weniger als 70 mol-%, besonders bevorzugt weniger als 50 mol-% aller Reste $R^1$ einen Polyether-Rest der allgemeinen Formel 2 mit f + g + h = 0 enthalten, insbesondere bevorzugt zeichnet sich das mindestens eine Polyethersiloxan nach Formel 1 dadurch aus, dass kein Rest $R^1$ einen Polyether-Rest der allgemeinen Formel 2 mit f + g + h = 0 enthält.

3. Zusammensetzung nach einem der Ansprüche 1 oder 2, **dadurch gekennzeichnet, dass** das mindestens eine Polyethersiloxan nach Formel 1 sich dadurch auszeichnet, dass mindestens 25 mol-%, bevorzugt mindestens 50 mol-%, besonders bevorzugt mindestens 75 mol-% aller Reste $R^1$ einen Polyether-Rest der allgemeinen Formel 2 mit $R^5$ = H enthalten.

4. Zusammensetzung nach einem der Ansprüche 1 bis 3, **dadurch gekennzeichnet, dass** das mindestens eine

Polyethersiloxan nach Formel 1 sich dadurch auszeichnet, dass mindestens 30 mol-%, bevorzugt mindestens 40 mol-%, besonders bevorzugt mindestens 50 mol-% aller Reste $R^1$ einen Polyether-Rest der allgemeinen Formel 2 enthalten, mit

e + f + g = 17 bis 60, bevorzugt 19 bis 40,
(f + g) / (e + f + g) > 0 bis 0,6, bevorzugt 0,1 bis 0,5, besonders bevorzugt 0,15 bis 0,4 und
h = 0.

5. Zusammensetzung nach einem der Ansprüche 1 bis 4, **dadurch gekennzeichnet, dass** das mindestens eine Polyethersiloxan nach Formel 1 sich dadurch auszeichnet, dass es mindestens 2 verschiedene Reste $R^1$ enthält.

6. Zusammensetzung nach einem der Ansprüche 1 bis 5, **dadurch gekennzeichnet, dass** das mindestens eine Polyethersiloxan nach Formel 1 sich dadurch auszeichnet, dass es mindestens zwei verschiedene Reste $R^1$ enthält, wobei mindestens ein Rest $R^1$ ein Polyether-Rest nach Formel 2 und ein Rest $R^1$ ein Alkylrest mit 6 bis 18 Kohlenstoffatomen ist, wobei höchstens 50 mol-%, bevorzugt höchstens 25 mol-%, aller Reste R', Alkylreste mit 6 bis 18 Kohlenstoffatomen sind.

7. Zusammensetzung nach einem der Ansprüche 1 bis 6, **dadurch gekennzeichnet, dass** das mindestens eine Treibmittel ausgewählt ist aus der Gruppe bestehend aus

- Kohlenwasserstoffen mit 3, 4 oder 5 Kohlenstoff-Atomen, bevorzugt cyclo-, iso- oder n-Pentan und
- halogenierten Kohlenwasserstoffen mit 3, 4 oder 5 Kohlenstoff-Atomen, bevorzugt Isopropylchlorid, Hydrofluoroolefine oder Hydrohaloolefine, bevorzugt 1234ze, 1234yf, 1224yd, 1233zd(E) oder 1336mzz.

8. Zusammensetzung nach einem der Ansprüche 1 bis 7, **dadurch gekennzeichnet, dass** zusätzlich mindestens ein Silizium-freies Tensid vorzugsweise in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthalten ist, vorzugsweise ausgewählt aus der Gruppe bestehend aus alkoxyliertem Pflanzenöl und ethoxyliertem Sorbitanfettsäureester.

9. Zusammensetzung nach Anspruch 8, **dadurch gekennzeichnet, dass** es sich bei dem alkoxylierten Pflanzenöl um ethoxyliertes Pflanzenöl, bevorzugt ethoxyliertes Rizinusöl handelt und das alkoxylierte Pflanzenöl vorzugsweise in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthalten ist.

10. Zusammensetzung nach Anspruch 8 oder 9, **dadurch gekennzeichnet, dass** das alkoxylierte Pflanzenöl, 15 bis 50 mol Alkylenoxid, bevorzugt 20 bis 45 mol Alkylenoxid, bezogen auf 1 mol Pflanzenöl enthält.

11. Zusammensetzung nach einem der Ansprüche 8 bis 10, **dadurch gekennzeichnet, dass** es sich bei dem ethoxylierten Sorbitanfettsäureester um Polysorbat 20, Polysorbat 40 und/oder Polysorbat 80 handelt und der ethoxylierte Sorbitanfettsäureester vorzugsweise in einer Gesamtmenge von 0,1 bis 15 Gewichtsteile, bevorzugt 1 bis 10 Gewichtsteile, bezogen auf 100 Gewichtsteile des gesamt eingesetzten Phenolharzes, enthalten ist.

12. Zusammensetzung nach einem der Ansprüche 1 bis 11, **dadurch gekennzeichnet, dass** der mindestens eine Katalysator ausgewählt ist aus der Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

13. Zusammensetzung nach einem der Ansprüche 1 bis 12, **dadurch gekennzeichnet, dass** der mindestens eine Katalysator in einer Gesamtmenge von 1 bis 30 Gewichtsteile, vorzugsweise 1 bis 25 Gewichtsteile, besonders bevorzugt 3 bis 20 Gewichtsteile, bezogen auf 100 Gewichtsteile des gesamt eingesetzten Phenolharzes, enthalten ist.

14. Zusammensetzung nach einem der Ansprüche 1 bis 13, **dadurch gekennzeichnet, dass** das mindestens eine Phenolharz einen Wassergehalt von 1 bis 25 Gew.-%, bevorzugt 4 bis 19 Gew.-%, bezogen auf das gesamt eingesetzte Phenolharz, aufweist.

15. Verfahren zur Herstellung von Phenolharz-Schaumstoff, **dadurch gekennzeichnet, dass** es unter Einsatz einer

Reaktionsmischung, enthaltend eine Zusammensetzung wie in einem der Ansprüche 1 bis 14 definiert, erfolgt.

16. Phenolharz-Schaumstoff hergestellt gemäß dem Verfahren nach Anspruch 15, **dadurch gekennzeichnet, dass** dieser vorzugsweise eine Dichte nach ASTM D1622-20 von 5 bis 500 $kg/m^3$, bevorzugt 10 bis 200 $kg/m^3$, insbesondere bevorzugt von 12 bis 100 $kg/m^3$ aufweist.

Europäisches Patentamt
European Patent Office
Office européen des brevets

# EUROPÄISCHER RECHERCHENBERICHT

Nummer der Anmeldung
EP 25 17 7227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y<br>A | US 3 271 331 A (ENDER HANS H)<br>6. September 1966 (1966-09-06)<br>* Beispiele 44,45 *<br>* Spalte 5, Zeilen 5-6 *<br>* Ansprüche *<br>* Spalte 10, Zeilen 8-31 *<br>----- | 1,12-16<br><br>8-11<br>2-7 | INV.<br>C08J9/00<br>C08G77/46<br>C08J9/14<br>C08L61/04 |
| Y | WO 2022/043561 A1 (KINGSPAN HOLDINGS IRL LTD [IE]) 3. März 2022 (2022-03-03)<br>* Ansprüche *<br>----- | 8-11 | |
| A | WO 2004/056911 A2 (KINGSPAN HOLDINGS IRL LTD [IE]; EDGERLEY GRAHAM MORGAN [GB] ET AL.) 8. Juli 2004 (2004-07-08)<br>* Ansprüche *<br>----- | 1-16 | |
| | | | RECHERCHIERTE SACHGEBIETE (IPC) |
| | | | C08J<br>C09J<br>C08G<br>C08L |

Der vorliegende Recherchenbericht wurde für alle Patentansprüche erstellt

1

| Recherchenort | Abschlußdatum der Recherche | Prüfer |
|---|---|---|
| Den Haag | 3. Oktober 2025 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 17 7227

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2025

| Im Recherchenbericht angeführtes Patentdokument | Datum der Veröffentlichung | Mitglied(er) der Patentfamilie | Datum der Veröffentlichung |
|---|---|---|---|
| US 3271331 A | 06-09-1966 | DE 1569492 A1 | 09-04-1970 |
| | | GB 1088767 A | 25-10-1967 |
| | | US 3271331 A | 06-09-1966 |
| WO 2022043561 A1 | 03-03-2022 | AU 2021331534 A1 | 16-02-2023 |
| | | CA 3186889 A1 | 03-03-2022 |
| | | EP 4172255 A1 | 03-05-2023 |
| | | GB 2598566 A | 09-03-2022 |
| | | JP 2023538737 A | 11-09-2023 |
| | | US 2023312854 A1 | 05-10-2023 |
| | | WO 2022043561 A1 | 03-03-2022 |
| WO 2004056911 A2 | 08-07-2004 | AU 2003288485 A1 | 14-07-2004 |
| | | EP 1572790 A2 | 14-09-2005 |
| | | GB 2398570 A | 25-08-2004 |
| | | IE 20030957 A1 | 30-06-2004 |
| | | WO 2004056911 A2 | 08-07-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3830174 A1
- DE 602004006376 T2
- EP 2898005 A1
- EP 1922357 A1
- WO 2022043561 A1
- EP 4073155 A1
- AU 2021238847 A1
- WO 2006114777 A1
- US 3298973 A
- GB 1088056 A
- GB 1087056 A
- DE 2833002 A1
- US 4067829 A
- DE 2254305 A1
- WO 2009048717 A1
- WO 2004056911 A2
- EP 0170357 B1
- EP 0170357 A1
- US 4444912 A
- DE 102008042181
- EP 4314111 A1

### In der Beschreibung aufgeführte Nicht-Patentliteratur

- *CHEMICAL ABSTRACTS*, 68478-92-2